# EUROPÄISCHE PATENTSCHRIFT

(11) **EP 2 533 030 B1**
(45) Veröffentlichungstag und Bekanntmachung des Hinweises auf die Patenterteilung: **11.01.2017**
(21) Anmeldenummer: 12170953.9
(22) Anmeldetag: 06.06.2012
(51) Int. Cl.: G01M 17/007, G01M 9/04

(54) **Laufbandsystem für Kraftzeugsprüfstand**
Moving belt system for vehicle test bench
Bande de roulement pour banc d'essai d'un véhicule

(30) Priorität: 07.06.2011 DE 102011106197
(43) Veröffentlichungstag der Anmeldung: 12.12.2012
(73) Patentinhaber: MAHA-AIP GmbH & Co. KG, 87490 Haldenwang (DE)
(72) Erfinder: Becherer, Thomas, 87463 Dietmannsried (DE); Schnalzger, Armin, 87493 Lauben (DE); Hartmann, Christian, 87452 Altusried (DE); Knestel, Anton, 87496 Hopferbach (DE)
(74) Vertreter: MERH-IP Matias Erny Reichl Hoffmann Patentanwälte PartG mbB

(56) Entgegenhaltungen:
- DE-A1- 10 037 928
- DE-A1-102008 014 716
- DE-A1-102008 036 315
- JP-A- 2006 170 639
- US-A1- 2010 175 465
- US-A1- 2011 083 499

## Beschreibung

Die vorliegende Erfindung betrifft eine Bandeinheit mit einem durchgehenden Laufband, das über zumindest zwei Rollen umläuft, und zumindest zwei unter einem Obertrum des Laufbandes angeordneten Aufstandseinheiten zum Stützen von einem auf dem Obertrum aufstehenden Kraftfahrzeugrad und Stützelemente zum Stützen des Laufbandes. Erfindungsgemäß wird eine annähernd reibungsfreie und gleichmäßige Stützung des Obertrums des Laufbandes erzielt, wobei gleichzeitig die Aufstandseinheiten flexibel an die Abmessungen eines zu prüfenden Kraftfahrzeuges angepasst werden können. Dies reduziert besonders die Kosten bei einer Anwendung der Bandeinheit in einem Windkanalprüfstand.

Zur Messung von Kräften, die bei aerodynamischen Versuchen in einem Windkanal auf ein Kraftfahrzeug wirken, sind unterschiedliche Versuchsstandanordnungen bzw. Prüfstände bekannt, z.B. Einband-, Dreiband- oder Fünfbandsysteme. Das Koordinatensystem ist derart gewählt, dass die x-Achse in die Laufrichtung eines Laufbandes des Prüfstandes zeigt. Die y-Achse steht quer zum Laufband. Die z-Achse zeigt ausgehend von der Oberfläche eines Obertrums des Laufbandes weg vom Laufband.

Einbandsysteme weisen eine Bandeinheit mit einem breiten durchgehenden Laufband auf, das auf zwei Rollen bzw. Trommeln umläuft. Das Kraftfahrzeug wird für aerodynamische Versuche mit allen Rädern auf dem einen Laufband positioniert und fixiert. Die Räder werden von Lagern, die unterhalb des Obertrums des Laufbandes zwischen den Rollen angeordnet sind, gestützt. Die Lager sind in der Regel an eine Messsensorik angeschlossen, so dass beispielsweise Kräfte in z-Richtung, z.B. die Gewichtskraft des Kraftfahrzeuges, ermittelt werden können. Die Kräfte in z-Richtung werden folglich durch das Laufband hindurch gemessen. Man spricht in diesem Zusammenhang von einer Durchbandmessung.

Die Durchbandmessung findet auch bei Dreiband- und Fünfbandsystemen Anwendung. Bei Dreibandprüfständen stehen die Reifen des Kraftfahrzeuges auf schmaleren Seitenbandeinheiten auf. Zur Simulation der Fahrfläche läuft zwischen den Laufbändern der seitlichen Bandeinheiten ein sogenanntes Mittenband. Die Durchbandmessung erfolgt an den beiden seitlichen Bandeinheiten. Bei einer Fünfbandversuchsstandanordnung sind eine Mittenbandeinheit und seitlich dazu vier kleinere Bandeinheiten vorgesehen. Gewöhnlich wird ein Kraftfahrzeug auf die vier seitlichen Bandeinheiten aufgestellt und die Bandeinheiten selbst werden gewogen. In diesem Fall findet die Durchbandmessung häufig keine Anwendung, sie ist jedoch möglich. Bei Fünfbandsystemen wird die Durchbandmessung insbesondere herangezogen, wenn die Spurbreite eines Fahrzeuges kleiner oder gleich der Breite des Mittenbandes ist und das Kraftfahrzeug lediglich auf dem Mittenband aufsteht.

Bekannte Windkanalwaagen wie beispielsweise in der DE 103 38 638 A1 beschrieben weisen positionsfeste Lager unterhalb des Laufbandes auf, die die Räder des Kraftfahrzeuges stützen und an eine Waage angeschlossen sind. Die Abmessungen der Lagerflächen und die Positionierung der Lager relativ zum Laufband sind nicht einstellbar bzw. verstellbar. Somit können Kraftfahrzeuge nicht vermessen werden, die aufgrund ihrer Abmessungen bezüglich Spurbreite und/oder Radstand nicht mit den Rädern auf den vorbestimmten Positionen der Lager aufstellbar sind. Sind die Lagerflächen groß genug dimensioniert, so können auch Kraftfahrzeuge mit unterschiedlicher Spurbreite und/oder Radstand auf den Lagern aufgestellt werden. Daraus ergibt sich dann aber der Nachteil, dass die durch den Reifenlatsch bedeckte Fläche der Lager viel kleiner ist als die Fläche des Lagers selbst. Dies führt zu Messungenauigkeiten beispielsweise bei der Messung der Gewichtskraft oder anderer z-Kräfte.

Aus der US 2011/0083499 A1 ist bekannt, dass sich die Position der Rollen des Rollenprüftstandes auf den Radstand eines Kraftfahrzeuges anpassen lässt. Allerdings ist das Prüfstandskonzept eines Rollenprüfstandes nicht mit einer Windkanalwaage vergleichbar. Bei Rollenprüfständen läuft kein Band um die Rollen herum und die Räder stehen direkt auf den Rollen auf. Im Gegensatz dazu stehen die Räder bei einer Windkanalwaage auf Messlagern (Aufstandseinheiten) zwischen den Rollen auf, die unterhalb des Bandes angeordnet sind. Die Problematik der Bandführung, der geforderten hohen Messgenauigkeit der z-Kräfte und der aerodynamischen Optimierung ist bei einem Rollenprüfstand, im Gegensatz zu einer Windkanalwaage, nicht gegeben.

Die Dokumente DE 10 2008 036315 A1, JP 2006 170639, DE 100 37 928 A1, US 2010/175465 A1 und DE 10 2008 014716 A1 offenbaren ebenfalls Prüfstände zur Durchführung von aerodynamischen Versuchen, die den Stand der Technik darstellen.

Aufgabe der Erfindung ist es eine Bandeinheit zu schaffen, die in einem Kraftfahrzeugprüfstand, insbesondere in einer Windkanalwaage, anordenbar ist und die eine flexible und wenig aufwändige Anpassung der Messflächen bzw. Aufstandsflächen an die Abmessungen eines zu vermessenden Kraftfahrzeuges erlaubt, insbesondere an den Randstand, die Spurbreite und/oder den Reifenlatsch, und die gleichzeitig eine optimale Stützung eines Laufbandes ermöglicht.

Die Aufgabe wird durch die unabhängigen Ansprüche gelöst. Bevorzugte Weiterentwicklungen der vorliegenden Erfindung werden durch die abhängigen Ansprüche beschrieben.

Eine erfindungsgemäße Bandeinheit kann ein durchgehendes Laufband, das über zumindest zwei Rollen umlaufen kann, aufweisen. Die Bandeinheit kann zumindest zwei unter einem Obertrum des Laufbandes angeordnete Aufstandseinheiten umfassen. Die Aufstandseinheiten können zum Stützen von einem auf dem Obertrum aufstehenden Fahrzeugrad vorgesehen sein. Ferner kann die Bandeinheit zumindest ein ortsfestes Stützelement und zumindest ein verstellbares Stützelement aufweisen. Die Stützelemente können zwischen den Rollen unterhalb des Obertrums zum Stützen des Laufbandes vorgesehen sein. Zumindest eine Aufstandseinheit kann mit zumindest einem verstellbaren Stützelement in Verbindung stehen. Zumindest eine Aufstandseinheit kann zusammen mit dem verstellbaren Stützelement verstellbar sein. Außerdem kann das verstellbare Stützelement zumindest eine Vorstehung bzw. ein erstes Element aufweisen. Die Vorstehung kann in einer der Vorstehung zugeordneten Aufnahme bzw. in einem als Gegenstück zum ersten Element ausgebildeten zweiten Element des ortsfesten Stützelementes angeordnet sein.

Die erfindungsgemäße Bandeinheit ermöglicht, dass die Position einer oder mehrerer Aufstandseinheiten flexibel und mit geringem Aufwand an die vorbestimmte Aufstandsposition eines Rades bzw. einer Achse eines Kraftfahrzeuges, das auf dem Obertrum des Laufbandes aufstehen kann, angepasst werden kann. Dazu können die Aufstandseinheiten verstellt bzw. verschoben werden. Das Verstellen der zumindest einen verstellbaren Stützeinheit zusammen mit der Aufstandseinheit erfolgt ohne größeren Aufwand. Beispielsweise kann ein automatisches Verstellen vorgesehen sein, so dass eine Demontage des Laufbandes vermieden werden kann. Dies verkürzt die Rüstzeiten und somit auch die damit einhergehenden Kosten.

Die spezifische Anordnung der Vorstehung und der Aufnahme ermöglicht, dass die Fläche des Laufbandes unterhalb des Obertrums, die nicht bedeckt bzw. gestützt ist, klein ist. Unbedeckte bzw. nicht gestützte Fläche (bzw. Abschnitt) des Laufbandes bedeutet, dass an diesen Stellen unterhalb des Obertrums des Laufbandes weder ein Abschnitt einer Stützeinheit noch einer Aufstandseinheit angeordnet ist. Damit das Laufband nicht großflächig einsinkt und dabei Schaden nimmt, sollten die nicht gestützten Flächen minimal gehalten werden. In der vorliegenden Erfindung ist die Stützung des Obertrums in jeder Verstellposition der Aufstandseineheit und/oder der Stützeinheit optimal gewährleistet. "Minimal" ist in Bezug auf das Verhältnis der gestützten zu den nicht gestützten Flächen derart zu verstehen, dass die nicht gestützten Flächen so gewählt sind, dass das Band (Dicke ca. 0,3 bis 1,2 mm, bevorzugt 0,6mm) nicht zu stark einsinkt bzw. durchbiegt (insbesondere beim Auffahren eine Kraftfahrzeuges auf die Bandeinheit), aber gleichzeitig die nicht gestützten Flächen groß genug sind, um weitere Randbedingungen zu erfüllen, beispielsweise sollte genügend Fläche (Zwischenräume) unterhalb des Obertrums gegeben sein, an der Fluid abgesaugt werden kann - dies wird im Folgenden noch genauer erläutert.

Weiter können das ortsfeste und das verstellbare Stützelement in einem ersten Rahmen angeordnet sein.

Die ortsfesten Stützelemente können dabei einteilig mit dem ersten Rahmen ausgeführt sein oder am ersten Rahmen fest montiert sein, z.B. stoff-, form- oder kraftschlüssig. Die verstellbaren Stützelemente können beispielsweise verschiebbar im ersten Rahmen angeordnet sein. Bevorzugt sind die verstellbaren Stützelemente gleitend im ersten Rahmen gelagert.

Das Verstellen der verstellbaren Stützelemente kann über eine Verstelleinrichtung erfolgen, z.B. einen Spindelantrieb. Die Verstelleinrichtung kann automatisch über eine Steuereinheit ansteuerbar und bedienbar sein. Bei einer automatischen Verstellbarkeit kann eine schnelle Anpassung der Aufstandseinheiten an den Radstand eines Fahrzeuges erfolgen, ohne dass Teile des Prüfstandes demontiert werden müssten.

Ferner kann die Vorstehung des ortsfesten und/oder des verstellbaren Stützelementes zumindest einen Fluidkanal aufweisen. Das Fluid kann Druckluft sein. Der Fluidkanal kann an eine Fluidzufuhr anschließbar sein. Die Vorstehung kann zumindest eine erste Öffnung an einer Oberfläche unterhalb des Obertrums des Laufbandes aufweisen und/oder permeabel für das Fluid sein.

Dadurch wird ein Ausströmen von Fluid zur Erzeugung eines Fluidfilms zwischen einer Oberfläche der Stützelemente und/oder der Aufstandseinheiten und dem Obertrum des Laufbandes erzeugt. Somit läuft das Band möglichst verschleißfrei auf dem Fluidfilm. Fluidkanäle bzw. -passagen und Öffnungen können in den Stützelementen, in der Vorstehung oder den Vorstehungen und in den Abstützeinheiten vorgesehen sein. Wenn ein fluidpermeables Material, z. B Grafit, für die Aufstandseinheit oder die Stützeinheiten verwendet wird, dann können die Öffnungen auch entfallen und lediglich ein oder mehrere Kanäle zum Verteilen des Fluides vorgesehen sein. Das Fluid strömt ausgehend von dem zumindest einen Verteilerkanal durch das permeable Material, z.B. durch Poren bzw. durch poröse Strukturen.

Die Vorstehung des verstellbaren Stützelementes und die Aufnahme des ortsfesten Stützelementes bzw. die Vorstehung des ortsfesten Stützelementes und die Aufnahme des verstellbaren Stützelementes können ineinandergreifen. Die Vorstehung kann in der Aufnahme relativ zu derselben bewegbar sein. Ferner kann bei einer relativen Bewegung der Vorstehung zur Aufnahme die Vorstehung weiter in die Aufnahme hinein oder weiter aus der Aufnahme heraus verfahrbar sein.

Dies hat den Vorteil, dass der Verstellspielraum der Aufstandseinheit so gering wie möglich durch den Platzbedarf der Stützelemente beeinträchtigt wird. Die Vorstehung und die Aufnahme greifen platzsparend ineinander ein. Ineinandereingreifen bedeutet dabei nicht, dass die Aufnahme und die Vorstehung in direktem Kontakt bzw. Berührung miteinander stehen müssen. Das Ineinandereingreifen ermöglicht ferner eine Optimierung der Laufbandfläche, die gestützt ist.

Grundsätzlich können die Vorstehungen weniger breit als die entsprechenden Aufnahmen ausgebildet sein.

Ferner kann bei einer Relativbewegung der Vorstehung des verstellbaren Stützelementes zur Aufnahme des ortsfesten Stützelementes bzw. zur Vorstehung des ortsfesten Stützelementes eine zweite Seitenfläche der Vorstehung des verstellbaren Stützelementes parallel zu einer ersten Seitenfläche der Vorstehung des ortsfesten Stützelementes verschoben werden.

Somit gleiten die Vorstehung des verstellbaren und des ortsfesten Stützelementes parallel aneinander vorbei. Dies kann mit gegenseitigem Kontakt oder berührungslos erfolgen. Die Stützelemente blockieren sich somit geringstmöglich beim Verfahren des verstellbaren Stützelementes. Dadurch wird der Verstellspielraum des verstellbaren Stützelementes groß.

Außerdem kann in zumindest einem Zwischenraum zwischen Vorstehung und Aufnahme Fluid abgesaugt werden.

In den Zwischenräumen, oberhalb derer die nicht gestützten Abschnitte des Obertrums des Laufbandes angeordnet sind, kann Fluid, insbesondere Luft, abgesaugt werden. Das Absaugen beispielsweise von Luft erzeugt ein Grobvakuum oder Feinvakuum. So wird verhindert, dass bei Fahrzeugen insbesondere mit hohem Abtrieb, z.B. Rennsportfahrzeugen, das Laufband angehoben bzw. abgehoben wird. Das Absaugen von Fluid aus den Zwischenräumen erfolgt bevorzugt gleichzeitig zum Ausblasen von Fluid im Bereich der Stützflächen (Gleitsauglager), so dass gleichzeitig ein Abheben des Laufbandes verhindert wird und ein Fluidfilm, auf dem das Band gleitet, aufgebaut wird. Dabei wird bevorzugt mehr Luft in den Zwischenräumen abgesaugt als Luft an den Stützelementen ausgeblasen. Zumindest sollte das Verhältnis von Ausblasen und Ansaugen von Fluid so gewählt werden, dass das Band im Bereich des Obertrums nicht durch den Abtrieb des Kraftfahrzeuges abgehoben wird, aber auch nicht auf den Stützflächen schleift, d.h. es sollte auf einem Fluidfilm gleiten.

Die zumindest eine Vorstehung kann teleskopierbar ausgeführt sein.

Durch teleskopierbare Vorstehungen kann der Verstellspielraum der Aufstandseinheiten und die gestützte Fläche des Obertrums des Laufbandes weiter erhöht werden. Teleskopierbar bedeutet, dass die Länge der Vorstehung variabel gestaltet ist. Bevorzugt wird die Längenanpassung von einer Steuereinheit automatisch durchgeführt. So kann beispielsweise beim Einfahren der Vorstehung in die Aufnahme eine Verkürzung der Vorstehung erfolgen und beim Ausfahren eine Verlängerung.

Ferner kann die Aufstandseinheit zumindest ein aktivierbares Aufstandselement aufweisen. Die Aufstandseinheit kann ferner zumindest ein Krafterfassungselement umfassen. Eine Steuereinheit zum Aktivieren und/oder Deaktivieren des zumindest einen aktivierbaren Aufstandselementes kann weiterhin vorgesehen sein.

Aktivierbares Aufstandselement bedeutet, dass dieses zum Erfassen von Kräften geeignet ist und beispielsweise von einer Steuereinheit in einen aktivierten oder deaktivierten Zustand versetzt werden kann. Hingegen weisen nicht aktivierbare bzw. passive Aufstandselemente keine Sensorik oder dergleichen auf. Im einfachsten Fall sind passive Aufstandselemente einfache Abdeck- bzw. Stützplatten.

Die Aufstandselemente können in unterschiedlichen Formen und Größen ausgeführt sein. Wenn die Aufstandseinheit eine Vielzahl Aufstandselemente aufweist, können Aufstandselemente unterschiedlicher Formen und Größen kombiniert werden.

Eine kostengünstige Lösung ist es, je Fahrzeugrad nur ein dem Reifenlatsch entsprechendes aktivierbares Aufstandselement vorzusehen. Passive Aufstandselemente können dann zum Stützen des Laufbandes weiterhin in der Aufstandseinheit vorgesehen sein.

Ein besonders schnell durchführbares und mit wenig Rüstzeit verbundenes Anpassen an die Spurbreite eines Fahrzeuges ist möglich, wenn die Aufstandseinheit nur aktivierbare Aufstandselemente aufweist. Von diesen werden dann je nach Spurbreite und/oder Reifenlatsch nur jene aktiviert, die unter der vorbestimmten Position des Reifenlatsches angeordnet sind. Die übrigen werden deaktiviert. Ein aktiviertes Aufstandselement ist messbereit.

Das Krafterfassungselement kann beispielsweise eine Kraftmessdose sein, die als Messelement z.B. einen Dehnungsmessstreifen oder eine Piezokeramik aufweist. Für eine erhöhte Messpräzision und/oder für eine erhöhte Flexibilität bei der Spurbreitenanpassung ist bevorzugt, dass an jedem Aufstandselement ein Krafterfassungselement angeordnet ist. Selbstverständlich können auch mehrere Krafterfassungselemente je Aufstandselement vorgesehen sein oder weniger als eines.

Eine Oberfläche unterhalb des Obertrums des zumindest einen Aufstandselementes kann bündig mit einer Oberfläche unterhalb des Obertrums der Stützelemente angeordnet sein.

Hierbei bezieht sich bündig darauf, dass die Oberflächen des Aufstandselementes und der Stützelemente, die unterhalb des Obertrums angeordnet sind, auf gleichem Niveau in z-Richtung sind. Mit anderen Worten bedeutet dies, dass keine Stufe in der Oberfläche unterhalb des Obertrums vorhanden ist, so dass das Laufband reibungsfrei gleiten kann bzw. an keiner Stelle einsinkt.

Ferner kann das zumindest eine aktivierbare Aufstandselement verstellbar gelagert sein.

Dadurch kann die Rüstzeit beim Anpassen des Prüfstandes an ein Kraftfahrzeug reduziert werden. Beispielsweise kann dann ein automatisches Verschieben des aktivierbaren Aufstandselementes an die vorbestimmte Position des Reifenlatsches ohne Demontage des Laufbandes erfolgen.

Ferner kann eine Vielzahl von Aufstandselementen zusammenhängend verstellbar gelagert sein.

Weist die Aufstandseinheit über die gesamte Breite des Laufbandes Aufstandselemente auf, so könnten durch eine Verschiebung z.B. in der y-Richtung ein oder mehrere Aufstandselemente seitlich über das Laufband hinausgeschoben werden. Dies ist in der Regel unerwünscht bzw. räumlich nicht möglich. Das zusammenhängende Verschieben bzw. Verstellen, also ein rolloartiges bzw. rolltreppenartiges Verschieben, verhindert das seitliches Überstehen der Aufstandselemente, da diese im Bereich des Laufbandrandes in eine andere Ebene beispielsweise unterhalb der übrigen Aufstandselemente verschoben werden können.

Ein erfindungsgemäßer Kraftfahrzeugprüfstand kann zumindest eine erfindungsgemäße Bandeinheit aufweisen. Der Kraftfahrzeugprüfstand kann in einem Windkanal angeordnet sein. Der erfindungsgemäße Prüfstand kann insbesondere ein Einband-, Dreiband- oder Fünfbandsystem sein.

Ein erfindungsgemäßes Verfahren zur Bestimmung von z-Kräften eines Kraftfahrzeuges mittels eines erfindungsgemäßen Kraftfahrzeugprüfstands. Dabei kann die Spurbreite und/oder der Radstand eines Kraftfahrzeuges ermittelt werden. Ferner kann das zumindest eine verstellbare Stützelement zusammen mit der Aufstandseinheit auf eine Position unterhalb einer vorbestimmten Position der Räder der Vorder- oder Hinterachse des zu vermessenden Kraftfahrzeuges verschoben werden. Die aktivierbaren Aufstandselemente, die unterhalb der vorbestimmten Position des Reifenlatsches angeordnet sein können, können aktiviert werden. Die übrigen aktivierbaren Aufstandselemente können deaktiviert werden. Und/oder es kann ein verstellbares aktiviertes Aufstandselement auf eine Position unterhalb der vorbestimmten Position eines Reifenlatsches verschoben werden. Das Kraftfahrzeug kann auf dem zumindest einen Laufband positioniert werden, so dass die Räder auf dem Laufband oberhalb der aktivierten Aufstandselemente aufstehen können. Dann können die Kräfte in z-Richtung erfasst werden.

Zusammenfassend hat die vorliegende Erfindung die Vorteile, dass die Aufstandseinheiten mit wenig Aufwand und flexibel an die Abmessungen eines Kraftfahrzeuges angepasst werden können. Dies erfolgt durch das Verstellen der Stützeinheit zusammen mit der Aufstandseinheit. Das Verstellen erfolgt z.B. automatisiert und erfordert keine längeren Rüstzeiten oder eine Demontage des Laufbandes. Gleichzeitig wird durch die Anordnung und Formgebung der Stützeinheiten jederzeit eine optimale Stützung des Laufbandes gewährleistet. Die aktive Messfläche der Aufstandseinheiten kann durch Aufstandselemente unterschiedlicher Größe und/oder durch Aktivieren/Deaktivieren der Aufstandselemente genau an einen Reifenlatsch angepasst werden. Dies erhöht die Messgenauigkeit.

Die Erfindung wird im Folgenden exemplarisch mit Bezug auf die beigefügten, schematischen Zeichnungen beschrieben. Es zeigen
Figur 1 eine Perspektiv-Ansicht einer erfindungsgemäßen Bandeinheit,
Figur 2 zeigt eine Draufsicht der Bandeinheit und zwei Seitenansichten,
Figur 3 zeigt eine perspektivische Ansicht zweier Stützvorrichtungen der Bandeinheit,
Figur 4 zeigt eine Explosionsansicht der Stützvorrichtung,
Figur 5 zeigt einen Teil der Stützvorrichtung in perspektivischer Ansicht,
Figur 6 zeigt die Stützvorrichtung in Draufsicht und in einer Seitenansicht,
Figur 7 zeigt verschiedene Positionen einer Aufstandseinheit der Stützvorrichtung und
Figur 8 zeigt eine Bandeinheit eines Einbandsystems mit Aufstandseinheiten.

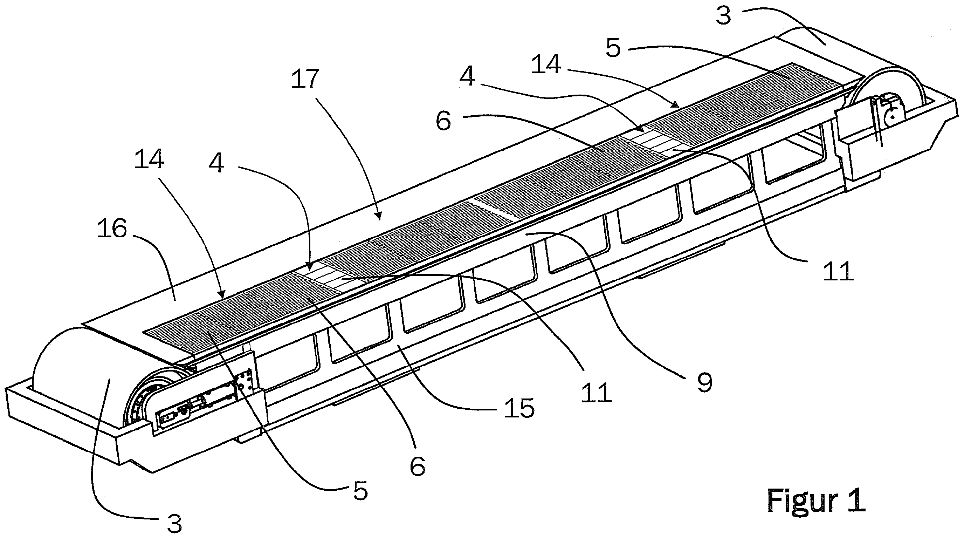

Figur 1 zeigt perspektivisch eine schematische, erfindungsgemäße Bandeinheit 1. Das Koordinatensystem der Bandeinheit 1 ist so gewählt, dass die x-Richtung in die Umlaufrichtung eines Laufbandes 2 zeigt. Die y-Achse zeigt quer zur Umlaufrichtung des Laufbandes 2. Die z-Achse zeigt weg von der Bandeinheit 1.

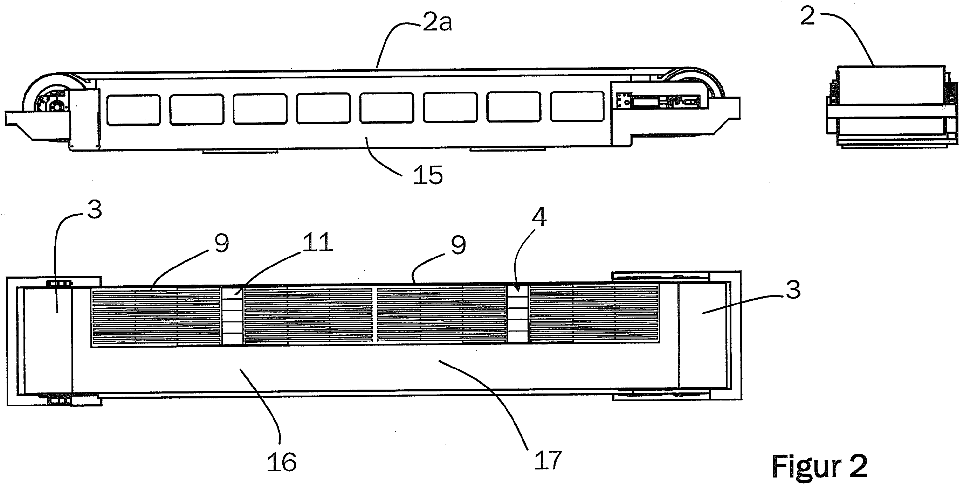

Figur 2 zeigt eine Draufsicht der Bandeinheit 1 und jeweils eine Seitenansicht der Bandeinheit 1 in x- und in y-Richtung. Die dargestellte Bandeinheit 1 ist eine Seitenbandeinheit eines Dreibandsystems, das beispielsweise in einem Windkanalprüfstand angeordnet sein kann. Die im Folgenden beschriebene Bandeinheit 1 kann auch in Einbandsystemen oder in Fünfbandsystemen angeordnet sein. Im Wesentlichen liegen die Unterschiede zwischen den jeweiligen Bandeinheiten 1 für die verschiedenen Prüfstandsysteme in der Breite und der Länge des Laufbandes 2 und der Größe der Rollen 3, sowie in dem Abstand zwischen den Rollen 3.

Wie aus den Figuren 1 und 2 ersichtlich wird, ist jeweils endseitig an einem zweiten Rahmen 15 eine Rolle 3 montiert. Beide Rollen 3 sind mittels Wellen drehbar gelagert. Die Wellen sind im zweiten Rahmen 15 gelagert, wobei eine Lagerung als Festlager ausgeführt ist und eine Lagerung als Loslager mit einem Freiheitsgrad in x-Richtung. Am Loslager ist weiterhin ein hydraulischer Aktuator angeordnet, so dass die Position der Rolle 3 in x-Richtung verändert werden kann. Dadurch kann beispielsweise die Spannung im Laufband 2 eingestellt werden.

Um die Rollen 3 herum ist das durchgehende Laufband 2 angeordnet. Das Laufband 2 ist nur in den beiden Seitenansichten der Figur 2 gezeigt. Ein Obertrum 2a des Laufbandes 2 läuft zwischen den Rollen 3 oberhalb zweier Stützvorrichtungen 14 und/oder einer Abdeckung 16. Die Stützvorrichtung 14 und die Abdeckung 16 verhindern, dass der Obertrum 2a zwischen den Rollen 3 absinkt, d.h. entgegen der z-Richtung durchhängt. Das Stützen des Obertrums 2a ist insbesondere dann notwendig, wenn auf dem Obertrum 2a die Gewichtskraft eines Kraftfahrzeuges lastet. Damit das Laufband 2 reibungslos und verschleißfrei über die Stützvorrichtungen 14 und/oder die Abdeckung 16 gleitet, wird ein Fluidfilm zwischen einer Oberfläche 17 der Stützvorrichtungen 14 bzw. der Abdeckung 16 und der Unterseite des Obertrums 2a erzeugt. Bevorzugt wird dieser Fluidfilm mittels Druckluft erzeugt.

Die in Figur 1 und 2 gezeigten Stützvorrichtungen 14 sind hintereinander entlang der x-Achse der Bandeinheit 1 jeweils mit einem ersten Rahmen 9 in zweiten Rahmen 15 angeordnet. Die Breite der Stützvorrichtungen 14 kann an die Breite des Laufbandes 2 angepasst sein. Allerdings, wie in den Figuren 1 und 2 gezeigt, kann die Breite der Stützvorrichtungen 14 auch geringer sein als die Breite des Laufbandes 2. Unter einem sehr breiten Laufband 2, z.B. bei einem Einbandprüfstand, können ferner auch z.B. vier Stützvorrichtungen 14 vorgesehen sein, d.h. beispielsweise jeweils zwei in der x- und y-Richtung. Besonders bevorzugt sind die erfindungsgemäßen Stützvorrichtungen 14 im Bereich der Räder des Kraftfahrzeuges angeordnet und sind weniger breit als das Laufband 2. In diesem Fall ist wie aus Figur 2 ersichtlich wird unterhalb des Laufbandes

2 eine oder mehrere Abdeckung(en) 16 vorgesehen, die den Bereich des Laufbandes 2 stützt, in dem keine Stützvorrichtung 14 vorgesehen ist.

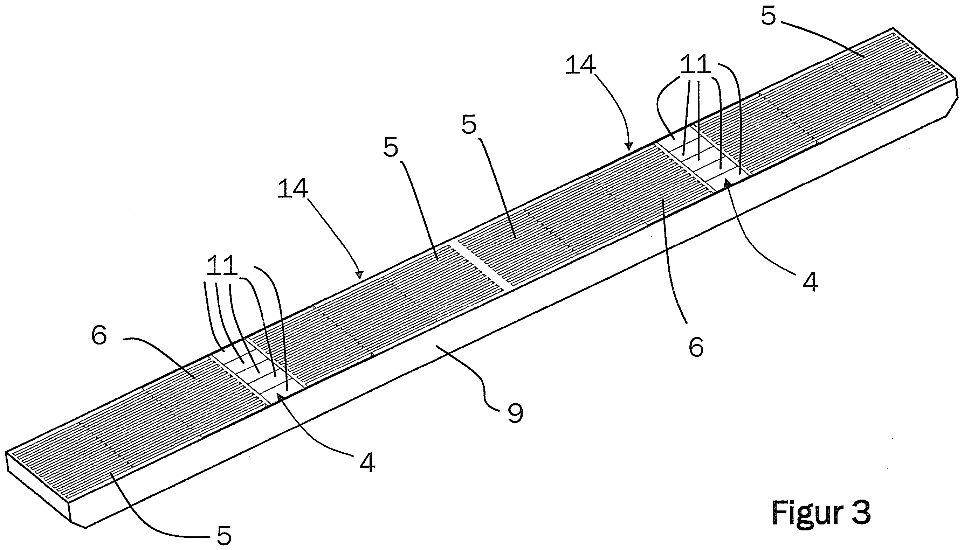

Figur 3 zeigt mit reduzierter Detaillierung die beiden Stützvorrichtungen 14 aus den Figuren 1 und 2. Die beiden Stützvorrichtungen 14 sind in dem im Wesentlichen wannenförmigen ersten Rahmen 9 angeordnet. Selbstverständlich können die beiden Stützvorrichtungen 14 auch jeweils in einem eigenen ersten Rahmen 9 angeordnet sein. Die Oberfläche 17 der Stützvorrichtungen 14, die in Richtung des Obertrums 2a zeigt, wird von im Wesentlichen rechenförmigen Stützelementen 5,6 und Aufstandseinheiten 4 gebildet. Figur 3 zeigt zwei Aufstandseinheiten 4, die im Wesentlichen rechteckförmige Unterteilungen aufweisen; dies sind Aufstandselemente 11. Die Stützvorrichtungen 14 werden im Folgenden noch detaillierter beschrieben. Die nicht gestützten bzw. bedeckten Abschnitte der Oberfläche 17 üben keine bzw. nur eine beschränkte Stützwirkung auf das Laufband 2 aus, so dass das Laufband 2 bzw. das Obertrum 2a zu stark einsinken könnte, wenn die Oberfläche 17 flächenanteilig zu große oder zu viele nicht gestützte Abschnitte aufweist.

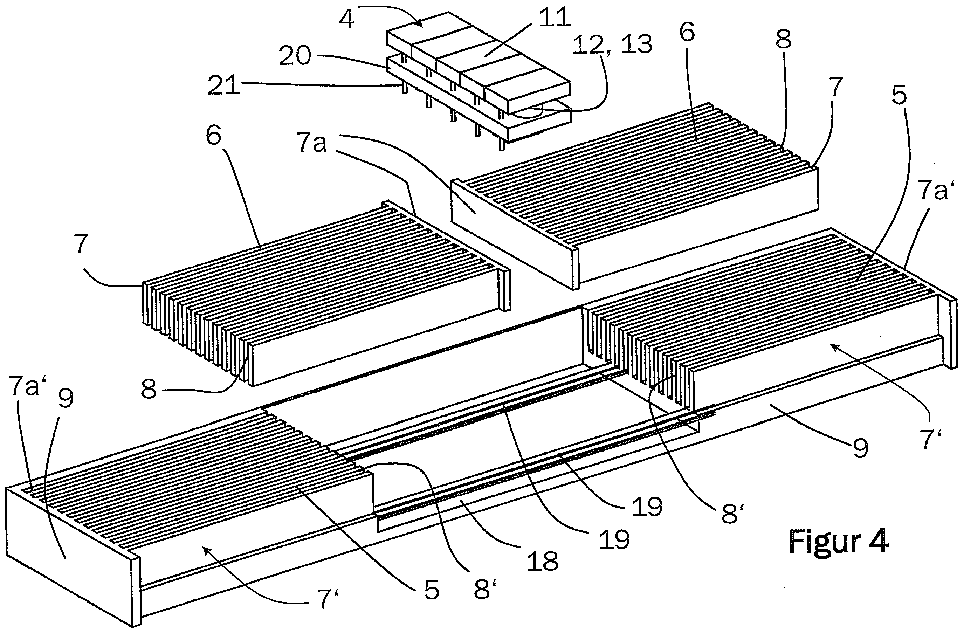

Figur 4 zeigt eine schematische Explosionsansicht einer der beiden Stützvorrichtungen 14 aus Figur 3. Anhand von Figur 4 wird im Folgenden verdeutlicht wie die optimale Stützwirkung der Stützvorrichtung 14 durch die Oberfläche 17 mit nur wenigen bzw. nur kleinen nicht gestützten Abschnitten ermöglicht wird.

Der erste Rahmen 9 weist im mittleren Bereich eine Aussparung 18 auf, in der zwei Schienen 19 angeordnet sind. Die Schienen 19 sind parallel zueinander in x-Richtung zeigend angeordnet. Die Schienen 19 weisen beispielsweise Hohlprofile auf und haben einen im Wesentlichen rechteckigen Querschnitt. In x-Richtung ist vor und hinter der Aussparung 18 jeweils ein ortsfestes Stützelement 5 angeordnet. Diese sind in Figur 4 einteilig mit dem ersten Rahmen 9 gezeigt. Allerdings können die ortsfesten Stützelemente 5 auch Einzelteile sein, die am Rahmen 9 geeignet befestigt werden, z.B. stoff-, kraft- oder formschlüssig.

Das ortsfeste Stützelement 5 weist eine im Wesentlichen rechenförmige Form auf, d.h. das ortsfeste Stützelement 5 wird aus zinkenförmigen Vorstehungen 7' und einem holmförmigen Basiselement 7a' gebildet, die einteilig ausgeführt sind. Die Vorstehungen 7' sind orthogonal zu dem Basiselement 7a' angeordnet. Das Basiselement 7a' ist kongruent zur y-Achse im Rahmen 9 angeordnet. Zwischen den Vorstehungen 7' sind Aufnahmen 8' angeordnet, die von jeweils zwei Vorstehungen 7' gebildet werden. Jede Vorstehung 7' weist eine erste und eine zweite Seitenfläche 7b', 7d' auf und eine vordere Endfläche 7c'. Die Seitenwände der Aufnahme 8' sind somit einheitlich mit einer ersten Seitenwand 7b' einer Vorstehung 7' und einer zweiten Seitenwand 7d' einer weiteren Vorstehung 7'. Die Vorstehungen 7' sind parallel zueinander in x-Richtung von einem Endabschnitt des ersten Rahmens 9 bis zur Aussparung 18 verlaufend angeordnet. Dabei ist das holmförmige Basiselement 7a' im Bereich des Endabschnitts des ersten Rahmens 9 angeordnet. Die Stirnflächen 7e' des Basiselementes 7a' zwischen den Vorstehungen 7' bilden gleichzeitig den Abschluss der Aufnahmen 8'.

Wie Figur 4 weiter zeigt sind die Vorstehungen 7 des verstellbaren Stützelementes 6 so angeordnet, dass diese in den Aufnahmen 8' des ortsfesten Stützelementes 5 angeordnet sind. Das verstellbare Stützelement 6 ist ebenfalls rechenförmig mit einem holmförmigen Basiselement 7a, an dem die Vorstehungen 7 orthogonal zum Basiselement 7a beabstandet und parallel zueinander angeordnet sind. Die Vorstehungen 7 des verstellbaren Stützelementes 6 weisen ebenfalls jeweils eine erste Seitenfläche 7b, eine vordere Endfläche 7c und eine zweite Seitenfläche 7d auf. Die Aufnahmen 8 werden jeweils von zwei Seitenflächen 7b, 7d zweier Vorstehungen 7 seitlich begrenzt. Die Stirnflächen 7e bilden jeweils eine endseitige Begrenzung der Aufnahmen 8.

Das verstellbare Stützelement 6 ist in der Aussparung 18 gleitend gelagert, so dass eine relative Position des verstellbaren Stützelementes 6 zum ersten Rahmen 9 durch Verschieben bzw. Verstellen verändert werden kann. Je nach Richtung des Verschiebens des verstellbaren Stützelementes 6 gleiten die Vorstehungen 7 des verstellbaren Stützelementes 6 parallel entweder weiter in die Aufnahmen 8' des ortsfesten Stützelementes 5 hinein oder weiter heraus. Dabei können die jeweiligen Seitenflächen der Vorstehungen 7, 7' in Kontakt miteinander stehen oder auch nicht. In anderen Worten können die Vorstehungen 7, 7' und Aufnahmen 8, 8'entweder so gestaltet sein, dass ein Kontakt zwischen den jeweiligen Vorstehungen 7, 7' bzw. Aufnahmen 8, 8' vorhanden ist oder kein Kontakt vorhanden ist. Grundsätzlich sind die Vorstehungen 7, 7' weniger breit als die Aufnahmen 8, 8'.

Beim Hinein- bzw. Herausfahren der Vorstehungen 7, 7' aus den jeweiligen Aufnahmen 8, 8' verringert bzw. vergrößert sich der Abstand zwischen den holmförmigen Basiselementen 7a, 7a' bzw. deren Innenflächen 7e, 7e'. Zum Hineinfahren bzw. Herausfahren kann das verstellbare Stützelement 6 linear entlang der x-Achse geführt verfahren werden. Beim Hineinfahren bzw. Herausfahren wird die Relativpostion der jeweiligen Endflächen 7c, 7c' zu den ersten Seitenflächen 7b, 7b' verändert.

Abschnitte der Aufnahmen 8, 8', die nicht durch eine Vorstehung 7, 7' belegt sind bzw. ausgefüllt werden, bilden die Zwischenräume 10. Oberhalb dieser Zwischenräume 10 wird das Laufband 2 nur eingeschränkt gestützt. Durch das Ineinandereingreifen der Vorstehungen 7, 7' und der Aufnahmen 8, 8' wird der Anteil der nicht gestützten Abschnitte an der Oberfläche 17 minimiert.

Weiterhin zeigt Figur 4, dass die Stützvorrichtung 14 symmetrisch zur y-Achse ausgebildet ist. Rechts und links der Symmetrieachse ist jeweils ein ortsfestes Stützelement 5 angeordnet und jeweils ein verstellbares Stützelement 6. Zwischen den beiden verstellbaren Stützelementen 6 ist eine Abstützeinheit 4 angeordnet. Bevorzugt ist die Abstützeinheit 4 fest zwischen den beiden holmförmigen Basiselementen 7a mit den verstellbaren Stützelementen 6 verbunden, z.B. stoff-, form- oder kraftschlüssig. Die Abstützeinheit 4 ist dabei ebenso wie die verstellbaren Stützelemente 6 gleitend auf den Schienen 19 gelagert. Selbstverständlich kann beispielsweise auch nur ein verstellbares Stützelement 6 an der Aufstandseinheit 4 angeordnet sein.

Im Wesentlichen umfasst die Abstützeinheit 4 zumindest ein aktivierbares Aufstandselement 11, ein Grundelement 20, zumindest ein Krafterfassungselement 12, ein Gegenkraftelement 13 und zumindest eine Fluidstromversorgung 21. Das bzw. die Aufstandselemente 11 sind zwischen den verstellbaren Stützelementen 6 gelagert. Die Oberfläche der Austandselemente 11, die zum Obertrum 2a zeigt, ist bündig mit der Oberfläche 17 der Stützvorrichtung 14. Bevorzugt sind die Aufstandselemente 11 in der y-Achse nebeneinander angeordnet. Selbstverständlich kann auch nur ein Aufstandselement 11 je Aufstandseinheit 4 vorgesehen sein. Die Anordnung der Aufstandselemente 11, deren Form und deren Abmessungen können je nach Einsatzzweck unterschiedlich sein. Bevorzugt ist die Form im Wesentlichen rechteckig. Das Material ist bevorzugt Grafit. Es kann aber auch ein metallisches Material oder ein Kunststoff verwendet werden.

Das Krafterfassungselement 12 ist zwischen dem aktivierbaren Aufstandselement 11 und dem Grundelement 20 angeordnet. Bevorzugt ist jeweils ein Krafterfassungselement 12 je aktivierbaren Aufstandselement 11 vorgesehen. Kräfte in z-Richtung, die auf das Aufstandselement 11 wirken, werden vom Krafterfassungselement 12 erfasst und an eine nicht gezeigte Steuereinheit weitergeleitet. Die Krafterfassungselemente 12 können in Gegenkraftelemente 13 integriert sein, die in einer einfachsten Ausführung beispielsweise zylindrische Körper sind. Die Gegenkraftelemente 13 können auch beispielsweise Federn, hydraulische Aktuatoren, druckluftgespeiste Aktuatoren oder dergleichen sein. Die Kräfte, die auf die Aufstandselemente 11 wirken, werden in die Grundplatte 20 eingeleitet und von dort aus in den ersten und zweiten Rahmen 9, 15. Die Gegenkraftelemente 13 verhindern ein zu starkes Einsinken bzw. Nachgeben der Aufstandselemente 11, wenn ein Kraftfahrzeug auf diesen aufsteht.

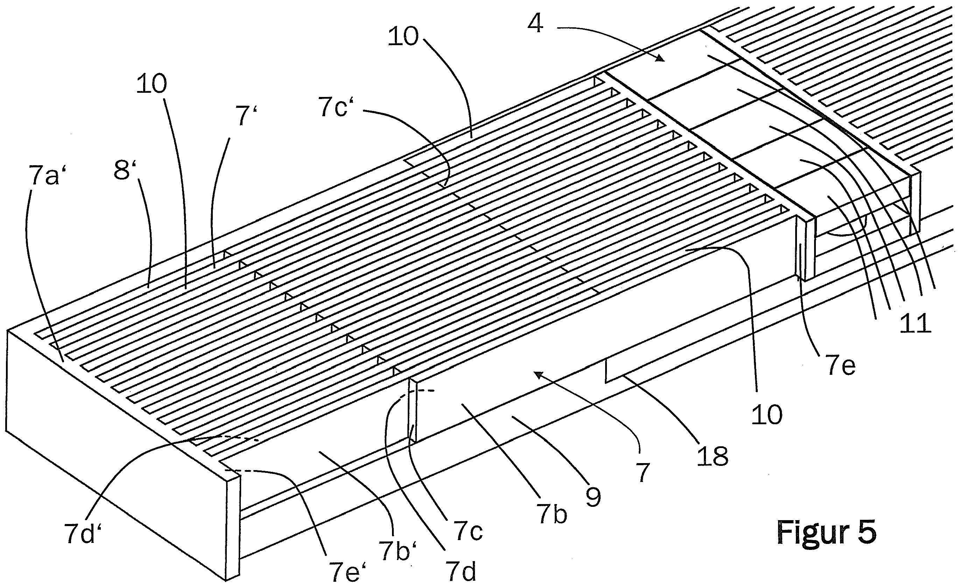

Figur 5 zeigt im Wesentlichen eine Hälfte der Stützvorrichtung 14, wenn die Vorstehungen 7, 7' und Aufnahmen 8, 8' der jeweiligen Stützelemente 5,6 ineinander angeordnet sind. Figur 5 zeigt ferner die Zwischenräume 10, die je nach Relativposition der Stützeinheiten 5,6 zueinander bzw. der Aufnahmen 8, 8' und Vorstehungen 7, 7' zueinander in ihren Abmessungen und ihrer Position variieren können.

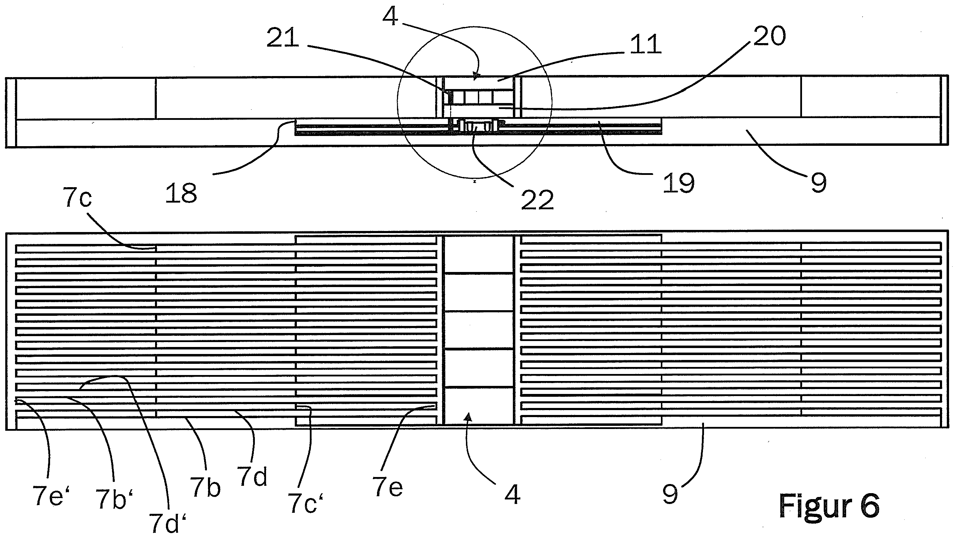

Figur 6 zeigt neben einer Draufsicht auf die Stützvorrichtung 14 auch eine Seitenansicht, aus der die Lagerung der Aufstandseinheit 4 ersichtlich wird. Unterhalb des Grundelementes 20 ist eine Linearführung 22 fest daran angeordnet. Die Linearführung 22 umgreift die Schienen 19, so dass die Aufstandseinheit 4 in x-Richtung linear gleitend gelagert ist. Optional kann die Linearführung 22 auch anders ausgeführt sein, z.B. über Rollen, die in Schienen 19 laufen. Die Führungsrichtung muss nicht auf die x-Achse beschränkt sein. Es kann auch eine Führung in y-Richtung oder x-y-Richtung vorgesehen sein.

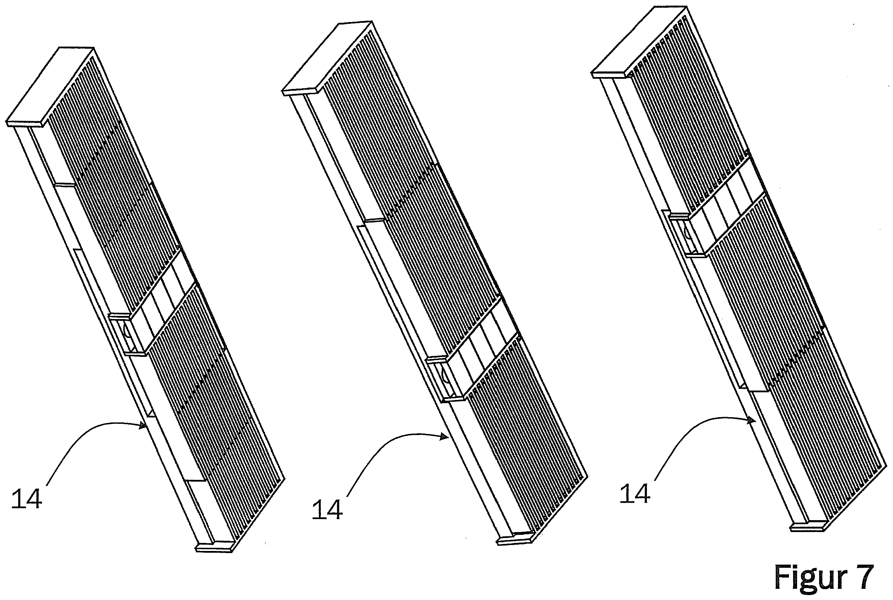

Extrempositionen der Aufstandseinheit 4 in x-Richtung relativ zum ersten Rahmen 9 sind in Figur 7 dargestellt. Hier ist gezeigt, dass in den Extrempositionen die Endflächen 7c, 7c' des verstellbaren und des ortsfesten Stützelementes 5, 6 in x-Richtung nicht auf gleicher Höhe angeordnet sind. Es ist jedoch auch möglich, dass die Extrempositionen in einer anderen Konfiguration der Stützvorrichtung 14 so eingestellt sind, dass die Endflächen 7c, 7c' in x-Richtung auf gleicher Höhe liegen. Die unterste Darstellung in Figur 7 zeigt eine Mittelposition der Aufstandseinheit 4 relativ zum ersten Rahmen 9 bzw. der Stützvorrichtung 14 an sich.

Neben den Abmessungen der Aussparung 18 können die Extrempositionen der verstellbaren Stützeinheiten 6 und der Aufstandseinheit 4 auch durch die Länge der Vorstehungen 7, 7' begrenzt werden. Teleskopierbare Vorstehungen 7, 7' können in diesem Fall zu einer Vergrößerung des Verstellspielraums beitragen. Teleskopierbare Vorstehungen 7, 7' ermöglichen ferner, dass die gestützte Fläche weiter vergrößert wird.

Die Verstellbarkeit der Aufstandseinheit 4 zusammen mit den verstellbaren Stützelementen 6 ermöglicht, dass mit einem großen Spielraum die Position der Aufstandseinheiten 4 an die vorbestimmte Aufstandsposition eines Rades eines Kraftfahrzeuges angepasst werden kann. Dazu wird vor dem Aufstellen des Kraftfahrzeuges auf dem Laufband 2 oder den Laufbändern 2 die Position der zumindest einen verstellbaren Aufstandseinheit 4 unter die Position verfahren, auf der zumindest ein Rad aufgestellt werden soll. Das Rad wird dann nach dem Aufstellen optimal von der Aufstandseinheit 4 gestützt und ein Einsinken des Laufbandes 2 vermindert.

Das Verstellen der verstellbaren Stützeinheiten 6 und der Aufstandseinheit 4 wird mittels einer nicht gezeigten Verstelleinrichtung ausgeführt. Dies ist beispielsweise ein Spindelantrieb, der an der Linearführung 22 angeordnet ist. Andere Optionen sind auch möglich, z.B. eine hydraulische Verstelleinrichtung oder ein elektrischer Antrieb der z.B. Rollen der Linearführung 22 antreibt. Die Steuerung der Verstelleinrichtung wird über die nicht gezeigte Steuereinheit ausgeführt, so dass ein Anwender z.B. an einem Computerterminal Steuereingaben vornehmen kann, die dann automatisch ausgeführt werden.

Die Spurbreitenanpassung und die Reifenlatschanpassung erfolgt im Wesentlichen mittels der Aufstandselemente 11. Gezeigt ist beispielsweise in den Figuren 3 und 4, dass mehrere Aufstandselemente 11 nebeneinander in y-Richtung in der Aufstandseinheit 4 angeordnet sind. Beispielsweise können lediglich aktivierbare Aufstandselemente 11 vorgesehen sein, die dann mittels der Steuereinheit aktiviert werden. Dabei werden lediglich diese aktiviert, die unterhalb der vorbestimmten Position des Fahrzeugrades angeordnet sind bzw. unterhalb des Reifenlatsches. Die übrigen können deaktiviert werden. Es wird eine genaue Anpassung der messaktiven Fläche der Aufstandseinheit 4 an die Position des Rades und den Reifenlatsch ermöglicht. Die Messgenauigkeit wird dadurch erhöht.

Optional kann auch nur ein aktivierbares Aufstandselement 11 in der Aufstandseinheit 4 vorgesehen sein, dass z.B. automatisch oder manuell an die Position des Rades verfahren wird. Dazu kann das Aufstandselement 11 beispielsweise auf dem Grundelement 20 gleitend gelagert sein.

Weiterhin ist es möglich, dass sowohl passive als auch aktivierbare Aufstandselemente 11 in der Aufstandseinheit 4 vorgesehen sind. Das oder die aktivierbaren Aufstandselemente 11 werden vor der Messung z.B. manuell auf einer Position unterhalb der vorbestimmten Position eines Rades angeordnet und die übrige Fläche der Aufstandseinheit 4 wird mit passiven Aufstandselementen 11 bedeckt. Passive Aufstandselemente 11 können im einfachsten Fall Abdeckplatten sein.

Ferner kann ausgeführt sein, dass z.B. ein aktivierbares Aufstandselement 11 vorgesehen ist und die übrigen Aufstandselemente 11 der Aufstandseinheit 4 passiv sind, wobei die Aufstandselemente 11 in diesem Fall zusammenhängend verfahren werden können, z.B. in y-Richtung. Somit kann das aktivierbare Aufstandselement 11 automatisch unter eine Postion des Rades verschoben werden. Damit beim Verschieben der zusammenhängenden Aufstandselemente 11 keine Aufstandselemente 11 über den Seitenrand des ersten Rahmens 9 hinaus verschoben werden, ist bei dieser Option eine rolloartige Anordnung der Aufstandselemente 11 realisiert. In anderen Worten heißt das, dass die Aufstandselemente 11 in zumindest zwei Ebenen verschoben werden, z.B. wie bei einer Rolltreppe.

Die Spurbreitenanpassung und die Reifenlatschanpassung sind folglich sehr flexibel und automatisierbar. Die Messgenauigkeit wird besonders durch ein Anpassen der aktiven Messfläche an den Reifenlatsch erhöht.

Wie ferner aus den Figuren 4 und 6 ersichtlich ist, sind die Aufstandseinheit 4 und die Aufstandselemente 11 an eine Fluidstromversorgung 21 angeschlossen. Das Fluid ist beispielsweise Druckluft. Diese wird über eine nicht gezeigte Zentraleinheit an die Vielzahl Druckleitungen 21 geleitet und von diesen an die Aufstandselemente 11 weitergeleitet. Die Aufstandselemente 11 sind bevorzugt aus Grafit, das porös ist und somit durchlässig für Druckluft. Somit kann die Fluidstromversorgung 21 an den Aufstandselementen 11 angeordnet sein und dort in einen zentralen Fluidkanal münden, von dem ausgehend die Druckluft durch das Aufstandselement 11 hindurch in Richtung des Laufbandes 2 strömt und unterhalb des Obertrums 2a einen Fluidfilm bildet. Optional können auch kleinere Verteilerkanäle in den Aufstandselementen 11 vorgesehen sein, die an der Oberseite der Aufstandselemente 11 in Öffnungen münden, so dass die Druckluft aus den Öffnungen heraus in Richtung des Obertrums 2a des Laufbandes 2 strömt.

Weiterhin können die Stützelemente 5,6, der erste Rahmen 9 und die Abdeckung(en) 16 permeabel für Fluid sein oder Fluidkanäle aufweisen, so dass diese von der Zentraleinheit gespeist ebenfalls Fluid, z.B. Druckluft, in Richtung des Obertrums 2a des Laufbandes 2 befördern bzw. leiten können. Selbstverständlich können die Stützelemente 5,6, die Abdeckung 16 und der erste Rahmen 9 auch Öffnungen aufweisen. Somit wird ein Ausblasen von Druckluft zwischen der Oberfläche 17 und dem Obertrum 2a großflächig ermöglicht, so dass ein homogen verteilter Fluidfilm das Laufband 2 optimal gleitend lagert.

Besonders bei Rennsportwagen, die einen erhöhten Abtrieb erzeugen, kann, neben dem Ausblasen von Fluid zur Erzeugung eines Fluidfilms, ein zumindest geringes Vakuum zumindest abschnittsweise unterhalb des Obertrums erzeugt werden. Das Vakuum verhindert, dass das Laufband 2 durch den Abtrieb des Kraftfahrzeuges im Bereich des Obertrums 2a angehoben wird. Das Absaugen von Fluid wird in der vorliegenden Erfindung bevorzugt in den Zwischenräumen 10 vorgenommen. Das heißt, dass im ersten Rahmen 9 unterhalb der Aufnahmen 8 der ortsfesten Stützelemente 5 Öffnungen angeordnet sind, die das Absaugen von Luft aus den Zwischenräumen 10 ermöglichen. Es ist möglich, gleichzeitig Luft aus den Zwischenräumen 10 abzusaugen und Luft oberhalb der Stützelemente 5,6, des ersten Rahmens 9 und der Aufstandseinheit 4 auszublasen (Saugdrucklager). Selbstverständlich kann auch nur abgesaugt oder nur ausgeblasen werden. Das Verhältnis aus Absaugen in den Zwischenräumen 10 und Ausblasen von Fluid in den gestützten Bereichen unterhalb des Obertrums 2a sollte so austariert sein, dass das Band 2 nicht abhebt, wenn ein auftrieberzeugendes Fahrzeug vermessen wird, aber gleichzeitig das Band 2 auch nicht durchhängt und dann auf den Stützelementen 5,6 schleift; d.h. es sollte jederzeit auf einem Fluidfilm gleiten. Weiterhin bevorzugt kann das oben beschriebene Saugdrucklager auch im Bereich oberhalb der Abdeckung(en) 16 angeordnet sein, d.h. es wird dann neben dem Ausblasen und Ansaugen im Bereich der Stützvorrichtungen 14 zusätzlich im Bereich der Abdeckung(en) 16 Luft ausgeblasen und abgesaugt.

Je nach Prüfstandsystem kann der erfindungsgemäße Kraftfahrzeugprüfstand mit einer erfindungsgemäßen Bandeinheit 1 unterschiedlich ausgeführt sein. So können bei einem Dreibandsystem beispielsweise zwei schmaler ausgeführte Stützvorrichtungen 14 in der Bandeinheit 1 in x-Richtung hintereinander angeordnet sein. Bei einem Einbandsystem mit breiterem Laufband 2 kann es beispielsweise zweckmäßig sein, zumindest zwei breitere Stützvorrichtungen 14 in x-Richtung hintereinander angeordnet vorzusehen und zwei Stützvorrichtungen 14 auch in y-Richtung vorzusehen, so dass die Bandeinheit im zweiten Fall vier Aufstandseinheiten 4 umfasst, d.h. bei vierrädrigen Fahrzeugen je Fahrzeugrad eine Aufstandseinheit 4. Selbstverständlich können auch bei einem Einbandsystem lediglich zwei Aufstandseinheiten 4 in x-Richtung und nur eine in y-Richtung vorgesehen sein.

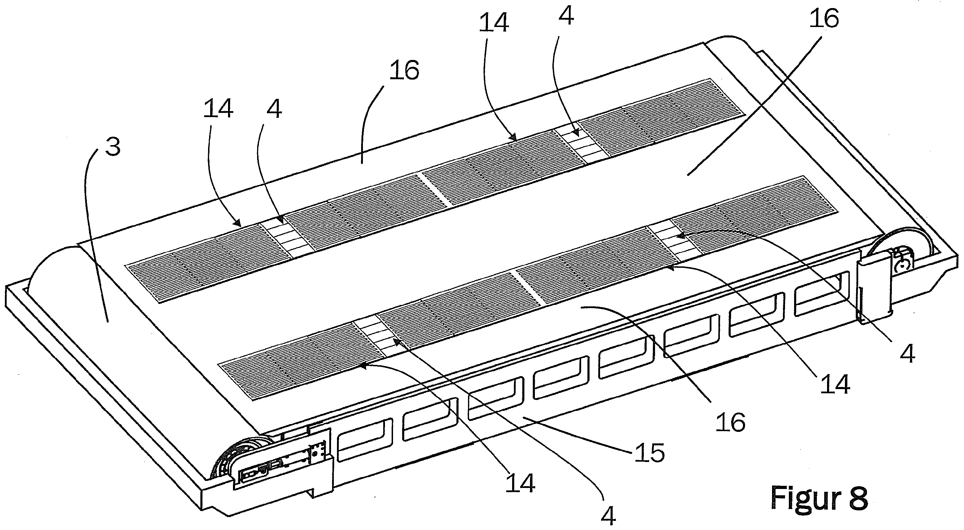

Figur 8 zeigt eine bevorzugte Konfiguration der Bandeinheit 1 eines Einbandsystems mit vier Stützvorrichtungen 14 und vier Aufstandseinheiten 4 (Hochdrucklager). Das Laufband 2 ist in Figur 8 nicht dargestellt. Zwei Stützvorrichtungen 14 sind in x-Richtung hintereinander angeordnet. Zwei weitere sind dazu in y-Richtung parallel und beabstandet angeordnet. Jede der vier Aufstandseinheiten 4 nimmt jeweils ein Rad eines Kraftfahrzeuges auf. Der Abstand zwischen den Stützvorrichtungen 14 in y-Richtung und die Breite der Stützvorrichtungen 14 sind in der in Figur 8 gezeigten Konfiguration derart ausgeführt, dass bei einer gewöhnlichen Verteilung der Spurbreiten verschiedener Kraftfahrzeugstypen die Räder im Bereich der Stützvorrichtungen 14 auf dem Laufband 2 aufstehen. Der Bereich des Obertrums 2a, in dem keine Stützvorrichtungen 14 angeordnet sind, wird von der Abdeckung 16 gestützt, die einteilig oder mehrteilig ausgeführt sein kann. Wie weiter oben beschrieben gleitet der Obertrum 2a auf einem Fluidfilm. Das Fluid kann insbesondere aus den Aufstandselementen 11, den Stützelementen 5,6, dem ersten Rahmen 9 und der Abdeckung 16 ausgeblasen werden. Gleichzeitig wird Fluid insbesondere aus den Zwischenräumen 10 der Stützvorrichtungen 14 und aus Saugtaschen der Abdeckung 16 abgesaugt, so dass unterhalb des Obertrums 2a ein großes Saugdrucklager vorliegt, das die Lage des Obertrums 2a in z-Richtung reguliert.

Das erfindungsgemäße Verfahren sieht vor, dass vor dem Aufstellen des Kraftfahrzeuges auf das Laufband 2 oder die Laufbänder 2 die Abmessungen des Kraftfahrzeuges ermittelt werden, z.B. Radstand, Spurbreite und/oder Reifenlatsch. Dann werden entsprechend des Radstandes zumindest eine Aufstandseinheit 4 der Bandeinheit 1 so verstellt bzw. verschoben, dass die Aufstandseinheiten 4 einen Abstand in z.B. x-Richtung voneinander aufweisen, der dem Radstand des zu prüfenden Fahrzeuges entspricht. Durch das Verstellen der Aufstandseinheiten 4 wird auch die Positionierung des Fahrzeuges auf dem Laufband 2 für die Prüfung teilweise festgelegt. Weiterhin kann die Positionierung noch verfeinert festgelegt werden, indem die Aufstandseinheiten 4 an die Spurbreite angepasst werden. Dies erfolgt beispielweise dadurch, dass eines oder mehrere Aufstandselemente 11 an der gewünschten bzw. vorbestimmten Aufstandsposition des jeweilgen Rades aktiviert werden. Die Anzahl der aktivierten Aufstandselemente 11 kann an die Größe des Reifenlatsches angepasst werden, so dass die aktive Messfläche mit dem Reifenlatsch übereinstimmt. Alternativ kann die Aufstandseinheit 4 auch z.B. mittels eines verstellbaren Aufstandelementes 11, das an die vorbestimmte Postion des Rades verfahren wird, an die Spurbreite angepasst werden. Dies gilt sowohl für ein einzeln verschiebbares Aufstandselement 11 als auch für die rolloartig verschiebbaren Aufstandselemente 11. Selbstverständlich kann bei geringeren Anforderungen an die Messgenauigkeit auch auf die Anpassung an die Spurbreite verzichtet werden oder nur ein aktives Aufstandselement 11 vorgesehen sein, das die gesamte Breite der Aufstandseinheit 4 bedeckt. Bevorzugt werden bei Verwendung nur eines aktivierbaren Aufstandselementes 11, das nicht die gesamte Breite der Aufstandseinheit 4 bedeckt, passive Aufstandselemente 11 (z.B. Abdeckplatten) zum Auffüllen des nicht vom aktivierbaren Aufstandselement 11 bedeckten Bereiches der Aufstandseinheit 4 verwendet.

Wenn die Aufstandseinheiten 4 positioniert sind, wird das Kraftfahrzeug auf die vorgesehen Positionen gestellt und die Prüfung bzw. die Messung durchgeführt.

Zusammenfassend zeichnet sich die vorliegende Bandeinheit 1 dadurch aus, dass eine sehr flexible Anpassbarkeit der Messflächen an die Abmessungen verschiedenster Kraftfahrzeuge ermöglicht wird und dabei die Messgenauigkeit erhöht werden kann. Die Anpassung kann vollständig automatisiert sein, so dass diese sehr schnell und ohne Demontage der Bandeinheit 1 oder des Prüfstandes vorgenommen werden kann. Dies spart Kosten. Weiterhin ist die Stützung des Laufbandes 2 jederzeit optimal, da die rechenförmigen Stützelemente 5,6 in jeder Position der Aufstandseinheit 4 eine große Fläche unterhalb des Obertrums 2a bedecken, wobei die Zwischenräume 10 so dimensioniert sind, dass ein Abheben des Laufbandes 2 durch Absaugen von Luft in den Zwischenräumen 10 verhindert werden kann.
- 1: Bandeinheit
- 2: Laufband
- 2a: Obertrum
- 3: Rolle
- 4: Aufstandseinheit
- 5: Ortsfestes Stützelement
- 6: Verstellbares Stützelement
- 7: Vorstehung des verstellbaren Stützelementes
- 7': Vorstehung des ortsfesten Stützelementes
- 7a: Holmförmiges Basiselement des verstellbaren Stützelementes
- 7a': Holmförmiges Basiselement des ortsfesten Stützelementes
- 7b: Erste Seitenfläche des verstellbaren Stützelementes
- 7b': Erste Seitenfläche des ortsfesten Stützelementes
- 7c: Vordere Endfläche des verstellbaren Stützelementes
- 7c': Vordere Endfläche des ortsfesten Stützelementes
- 7d: Zweite Seitenfläche des verstellbaren Stützelementes
- 7d': Zweite Seitenfläche des ortsfesten Stützelementes
- 7e: Stirnfläche des holmförmigen Basiselementes des verstellbaren Stützelementes
- 7e': Stirnfläche des holmförmigen Basiselementes des ortsfesten Stützelementes
- 8: Aufnahme des verstellbaren Stützelementes
- 8': Aufnahme des ortsfesten Stützelementes
- 9: Erster Rahmen
- 10: Zwischenraum
- 11: Aufstandselement
- 12: Krafterfassungselement
- 13: Gegenkraftelement
- 14: Stützvorrichtung
- 15: Zweiter Rahmen
- 16: Abdeckung
- 17: Oberfläche (der Stützvorrichtung 14 unterhalb des Obertrums 2a)
- 18: Aussparung
- 19: Schiene
- 20: Grundelement
- 21: Fluidstromversorgung
- 22: Linearführung

## Patentansprüche

1. Eine Bandeinheit mit
- einem durchgehenden Laufband (2), das über zumindest zwei Rollen (3) umläuft, und
- zumindest zwei unter einem Obertrum (2a) des Laufbandes (2) angeordneten Aufstandseinheiten (4) zum Stützen von einem auf dem Obertrum (2a) aufstehenden Fahrzeugrad,
- zumindest ein ortsfestes Stützelement (5) und zumindest ein verstellbares Stützelement (6), die zwischen den Rollen (3) unterhalb des Obertrums (2a) zum Stützen des Laufbandes (2) vorgesehen sind, wobei
zumindest eine Aufstandseinheit (4) mit zumindest einem verstellbaren Stützelement (6) in Verbindung steht, so dass zumindest die eine Aufstandseinheit (4) zusammen mit dem verstellbaren Stützelement (6) verstellbar ist, und
das verstellbare Stützelement (6) zumindest eine Vorstehung (7) aufweist, die in einer der Vorstehung (7) zugeordneten Aufnahme (8') des ortsfesten Stützelementes (5) angeordnet ist.

2. Bandeinheit nach Anspruch 1, **gekennzeichnet dadurch, dass** ein Laufband (2), drei, fünf oder sieben Laufbänder (2) vorgesehen sind.

3. Bandeinheit nach zumindest einem der vorangegangenen Ansprüche, **gekennzeichnet dadurch, dass** das ortsfeste und das verstellbare Stützelement (5, 6) in einem ersten Rahmen (9) angeordnet sind.

4. Bandeinheit nach zumindest einem der vorangegangenen Ansprüche, **gekennzeichnet dadurch, dass** die Vorstehung (7, 7') zumindest einen Fluidkanal aufweist, insbesondere für Druckluft, der an eine Fluidzufuhr anschließbar ist, und
die Vorstehung (7, 7') zumindest eine erste Öffnung an einer Oberfläche unterhalb des Obertrums (2a) des Laufbandes (2) aufweist bzw. permeabel für Fluid ist.

5. Bandeinheit nach zumindest einem der vorangegangenen Ansprüche, **gekennzeichnet dadurch, dass** die Vorstehung (7, 7') und die Aufnahme (8, 8') ineinandergreifen und dass die Vorstehung (7) in der Aufnahme (8') relativ zu derselben bewegbar ist und
bei einer relativen Bewegung der Vorstehung (7) zur Aufnahme (8') die Vorstehung (7) weiter in die Aufnahme (8') hinein oder weiter aus der Aufnahme (8') heraus verfahrbar ist.

6. Bandeinheit nach zumindest einem der vorangegangenen Ansprüche, **gekennzeichnet dadurch, dass** bei einer Relativbewegung der Vorstehung (7) des verstellbaren Stützelementes (6) zur Aufnahme (8') des ortsfesten Stützelementes (5) bzw. zur Vorstehung (7') des ortsfesten Stützelementes (5) eine zweite Seitenfläche (7d) der Vorstehung (7) des verstellbaren Stützelementes (6) parallel zu einer ersten Seitenfläche (7b') der Vorstehung (7') des ortsfesten Stützelementes (5) verschoben wird.

7. Bandeinheit nach zumindest einem der vorangegangenen Ansprüche, **gekennzeichnet dadurch, dass** in zumindest einem Zwischenraum (10) zwischen Vorstehung (7, 7') und Aufnahme (8, 8') Fluid abgesaugt wird.

8. Bandeinheit nach zumindest einem der vorangegangenen Ansprüche, **gekennzeichnet dadurch, dass** die Vorstehung (7, 7') teleskopierbar ausgeführt ist.

9. Bandeinheit nach zumindest einem der vorangegangenen Ansprüche, **gekennzeichnet dadurch, dass** die Aufstandseinheit (4) zumindest ein aktivierbares Aufstandselement (11) und zumindest ein Krafterfassungselement (12) aufweist und
eine Steuereinheit zum Aktivieren und/oder Deaktivieren des aktivierbaren Aufstandselementes (11) vorgesehen ist.

10. Bandeinheit nach zumindest einem der vorangegangenen Ansprüche, **gekennzeichnet dadurch, dass** eine Oberfläche unterhalb des Obertrums (2a) des zumindest einen Aufstandselementes (11) bündig mit einer Oberfläche unterhalb des Obertrums (2a) der Stützelemente (5, 6) angeordnet ist.

11. Bandeinheit nach zumindest einem der vorangegangenen Ansprüche, **gekennzeichnet dadurch, dass** das aktivierbare Aufstandselement (11) verstellbar gelagert ist.

12. Bandeinheit nach zumindest einem der vorangegangenen Ansprüche, **gekennzeichnet dadurch, dass** eine Vielzahl von Aufstandselementen (11) zusammenhängend verstellbar gelagert sind.

13. Ein Kraftfahrzeugprüfstand mit zumindest einer Bandeinheit (1) nach zumindest einem der vorangegangenen Ansprüche, **gekennzeichnet dadurch, dass** der Kraftfahrzeugprüfstand in einem Windkanal angeordnet ist.

14. Ein Kraftfahrzeugprüfstand mit einer, drei, fünf oder sieben Bandeinheit(en) (1) nach zumindest einem der Ansprüche 1-12, **gekennzeichnet dadurch, dass** der Kraftfahrzeugprüfstand in einem Windkanal angeordnet ist.

15. Verfahren zur Bestimmung von Kräften in z-Richtung eines Kraftfahrzeuges mittels einem Kraftfahrzeugprüfstand nach Anspruch 13 oder 14, wobei
die Spurbreite und/oder der Radstand des Kraftfahrzeuges ermittelt wird,
das zumindest eine verstellbare Stützelement (6) zusammen mit der Aufstandseinheit (4) auf eine Position unterhalb einer vorbestimmten Position der Räder der Vorder- oder Hinterachse des zu vermessenden Kraftfahrzeuges verschoben wird,
aktivierbare Aufstandselemente (11), die unterhalb der vorbestimmten Position des Reifenlatsches angeordnet sind, aktiviert werden und die übrigen aktivierbaren Aufstandselemente (11) deaktiviert werden, oder
ein verstellbares aktiviertes Aufstandselement (11) auf eine Position unterhalb der vorbestimmten Position eines Reifenlatsches verschoben wird,
das Kraftfahrzeug auf dem zumindest einen Laufband (2) positioniert wird, so dass die Räder auf dem Laufband (2) oberhalb der aktivierten Aufstandselemente (11) aufstehen, und
die Kräfte in z-Richtung erfasst werden.

## Claims

1. A belt unit comprising:
- a continuous moving belt (2) circulating over at least two rollers (3), and
- at least two contact units (4) arranged under an upper run (2a) of said moving belt (2) for supporting a vehicle wheel resting on said upper run (2a),
- at least one stationary support element (5) and at least one adjustable support element (6) which are provided between said rollers (3) below said upper run (2a) for supporting said moving belt (2),
wherein
- at least one contact unit (4) is connected with at least one adjustable support element (6), so that said at least one contact unit (4) is adjustable together with said adjustable support element (6),
and
- said adjustable support element (6) comprises at least one projection (7) arranged in a receptacle (8') of said stationary support element (5) associated with said projection (7).

2. The belt unit according to claim 1, **characterized in that** one moving belt (2) three, five or seven moving belts (2) are provided.

3. The belt unit according to at least one of the preceding claims, **characterized in that** said stationary and adjustable support elements (5, 6) are arranged in a first frame (9).

4. The belt unit according to at least one of the preceding claims, **characterized in that** said projection (7, 7') has at least one fluid channel, in particular for compressed air, which is connectable to a fluid supply, and
said projection (7, 7') has at least one first opening on a surface below said upper run (2a) of said moving belt (2) or is permeable to fluid.

5. The belt unit according to at least one of the preceding claims, **characterized in that** said projection (7, 7') and said receptacle (8, 8') mesh with one another and that said projection (7) is movable in said receptacle (8') with respect thereto, and
during a relative movement of said projection (7) with respect to said receptacle (8'), said projection (7) is movable further into said receptacle (8') or further out of said receptacle (8').

6. The belt unit according to at least one of the preceding claims, **characterized in that**, during a relative movement of said projection (7) of said adjustable support element (6) with respect to said receptacle (8') of said stationary support element (5) or with respect to said projection (7') of said stationary support element (5), a second lateral surface (7d) of said projection (7) of said adjustable support element (6) is moved in parallel to a first lateral surface (7b') of said projection (7') of said stationary support element (5).

7. The belt unit according to at least one of the preceding claims, **characterized in that** fluid is drawn off in at least one space (10) between projection (7, 7') and receptacle (8, 8').

8. The belt unit according to at least one of the preceding claims, **characterized in that** said projection (7, 7') is configured telescopically.

9. The belt unit according to at least one of the preceding claims, **characterized in that** said contact unit (4) comprises at least one activatable contact element (11) and at least one force sensing element (12), and
a control unit for activating and/or deactivating said activatable contact element (11) is provided.

10. The belt unit according to at least one of the preceding claims, **characterized in that** a surface below said upper run (2a) of said at least one contact element (11) is arranged flush with a surface below said upper run (2a) of said support elements (5, 6).

11. The belt unit according to at least one of the preceding claims, **characterized in that** said activatable contact element (11) is supported adjustably.

12. The belt unit according to at least one of the preceding claims, **characterized in that** a plurality of contact elements (11) are supported adjustably in a connected manner.

13. A vehicle test bench comprising at least one belt unit (1) according to at least one of the preceding claims, **characterized in that** said vehicle test bench is arranged in a wind tunnel.

14. A vehicle test bench comprising one, three, five or seven belt unit(s) (1) according to at least one of the claims 1-12, **characterized in that** said vehicle test bench is arranged in a wind tunnel.

15. A method of determining forces in the z direction of a motor vehicle by means of a motor vehicle test bench according to claim 13 or 14, wherein
the track width and/or the wheel base of said motor vehicle is determined,
said at least one adjustable support element (6) is moved together with said contact unit (4) to a position below a predetermined position of the wheels of the front or rear axle of said motor vehicle to be measured,
activatable contact elements (11) arranged below the predetermined position of the tire contact area are activated and the remaining activatable contact elements (11) are deactivated, or
an adjustable activated contact element (11) is moved to a position below the predetermined position of the tire contact area,
said motor vehicle is positioned on said at least one moving belt (2), so that the wheels rest on said moving belt (2) above the activated contact elements (11), and
the forces are sensed in the z direction.

## Revendications

1. Ensemble de bande comportant
- une bande de roulement continue (2) qui circule sur au moins deux rouleaux (3),
- au moins deux unités de support (4) agencées au-dessous d'un brin supérieur (2a) de la bande de roulement (2) et destinées à supporter une roue de véhicule posée sur le brin supérieur (2a),
- au moins un élément d'appui (5) fixe et au moins un élément d'appui (6) mobile qui sont prévus entre les rouleaux (3) au-dessous du brin supérieur (2a) pour supporter la bande de roulement (2),
dans lequel
au moins une unité de support (4) est en liaison avec au moins un élément d'appui (6) mobile de telle sorte que ladite au moins une unité de support (4) est mobile conjointement avec l'élément d'appui mobile (6), et
l'élément d'appui mobile (6) présente au moins une saillie (7) qui est agencée dans un logement de réception (8'), associé à la saillie (7), de l'élément d'appui fixe (5).

2. Ensemble de bande selon la revendication 1, **caractérisé en ce qu'**il est prévu une bande de roulement (2), trois, cinq ou sept bandes de roulement (2).

3. Ensemble de bande selon l'une au moins des revendications précédentes, **caractérisé en ce que** les éléments d'appui (5, 6) fixe et mobile sont agencés dans un premier cadre (9).

4. Ensemble de bande selon l'une au moins des revendications précédentes, **caractérisé en ce que** la saillie (7, 7') comprend au moins un canal à fluide, en particulier à air comprimé, qui est susceptible d'être raccordé à une alimentation en fluide, et
la saillie (7, 7') comprend au moins une première ouverture sur une surface au-dessous du brin supérieur (2a) de la bande de roulement (2) ou est perméable aux fluides.

5. Ensemble de bande selon l'une au moins des revendications précédentes, **caractérisé en ce que** la saillie (7, 7') et le logement de réception (8, 8') s'engagent mutuellement et **en ce que** la saillie (7) est mobile dans le logement de réception (8') par rapport à celui-ci, et
lors d'un mouvement relatif de la saillie (7) par rapport au logement de réception (8'), la saillie (7) est susceptible d'être déplacée plus loin vers l'intérieur du logement de réception (8') ou plus loin vers l'extérieur du logement de réception (8').

6. Ensemble de bande selon l'une au moins des revendications précédentes, **caractérisé en ce que** lors d'un mouvement relatif de la saillie (7) de l'élément d'appui mobile (6) par rapport au logement de réception (8') de l'élément d'appui fixe (5) ou par rapport à la saillie (7') de l'élément d'appui fixe (5), une seconde surface latérale (7d) de la saillie (7) de l'élément d'appui mobile (6) est déplacée parallèlement à une première surface latérale (7b') de la saillie (7') de l'élément d'appui fixe (5).

7. Ensemble de bande selon l'une au moins des revendications précédentes, **caractérisé en ce que** dans au moins un intervalle (10) entre la saillie (7, 7') et le logement de réception (8, 8'), le fluide est aspiré.

8. Ensemble de bande selon l'une au moins des revendications précédentes, **caractérisé en ce que** la saillie (7, 7') est réalisée de façon télescopique.

9. Ensemble de bande selon l'une au moins des revendications précédentes, **caractérisé en ce que** l'unité de support (4) comprend au moins un élément de support (11) activable et au moins un élément de détection de force (12), et
il est prévu une unité de commande pour activer et/ou désactiver l'élément de support (11) activable.

10. Ensemble de bande selon l'une au moins des revendications précédentes, **caractérisé en ce qu'**une surface au-dessous du brin supérieur (2a) dudit au moins un élément de support (11) est agencée en affleurement avec une surface au-dessous du brin supérieur (2a) des éléments d'appui (5, 6).

11. Ensemble de bande selon l'une au moins des revendications précédentes, **caractérisé en ce que** l'élément de support activable (11) est monté de façon mobile.

12. Ensemble de bande selon l'une au moins des revendications précédentes, **caractérisé en ce qu'**une multitude d'éléments de support (11) sont montés de façon mobile cohérente.

13. Banc d'essai de véhicule automobile comportant au moins un ensemble de bande (1) selon l'une au moins des revendications précédentes, **caractérisé en ce que** le banc d'essai de véhicule est agencé dans une soufflerie.

14. Banc d'essai de véhicule automobile comportant un, trois, cinq ou sept ensembles de bande (1) selon l'une au moins des revendications 1 à 12, **caractérisé en ce que** le banc d'essai de véhicule est agencé dans une soufflerie.

15. Procédé pour déterminer des forces en direction z d'un véhicule automobile au moyen d'un banc d'essai de véhicule automobile selon la revendication 13 ou 14, dans lequel
on détermine l'écartement et/ou l'empattement des roues du véhicule automobile,
on déplace ledit au moins un élément d'appui mobile (6) conjointement avec l'unité de support (4) jusqu'à une position au-dessous d'une position prédéterminée des roues de l'essieu avant ou arrière du véhicule automobile à mesurer,
on fait activer les éléments de support activables (11) qui sont agencés au-dessous de la position prédéterminée de l'aire de contact du pneumatique et on fait désactiver les éléments de support activables (11) restants, ou
on déplace un élément de support mobile (11) activé jusqu'à une position au-dessous de la position prédéterminée d'une aire de contact du pneumatique,
on positionne le véhicule automobile sur ladite au moins une bande de roulement (2) de telle sorte que les roues sont supportées sur la bande de roulement (2) au-dessus des éléments de support (11) activés, et
on détecte les forces en direction z.
